# EUROPEAN PATENT APPLICATION

(11) **EP 4 851 939 A1**
(43) Date of publication of application: **09.12.2026**
(21) Application number: 25747593.9
(22) Date of filing: 20.01.2025
(51) Int. Cl.: G06T 19/00, G06T 17/00, G06F 3/04815

(54) **CREATION METHOD FOR INTERACTION SPACE, INTERACTION CONTROL METHOD FOR INTERACTION SPACE, AND INTERACTION SPACE**

(30) Priority: 31.01.2024 CN 202410139786
(71) Applicant: Beijing Momo Information Technology Co., Ltd, Beijing 100015 (CN)
(72) Inventor: MAIMAITIMING, Abudoukadier, Beijing 100015 (CN); BAO, Zhen, Beijing 100015 (CN); WANG, Xudong, Beijing 100015 (CN); LYU, Gaolong, Beijing 100015 (CN); JIN, Xufei, Beijing 100015 (CN)
(74) Representative: Slingsby Partners LLP
(86) International application number: PCT/CN2025/073282
(87) International publication number: WO 2025/162021

(57) **Abstract**

The present disclosure provides a creation method and an interactive control method of an interactive space, an interactive space and an apparatus. The method includes: establishing a basic space model configured to support a plurality of component models; importing a three-dimensional model and/or animation of each component model into the basic space model; setting a corresponding position for each component model in the basic space model; and configuring interactive information for at least one component model to complete the establishment of the basic space. The creation method and the interactive control method of the interactive space, the interactive space and the apparatus according to the embodiments of the present disclosure can bring about a stereoscopic immersive experience through various interactions among the components in the basic space at the same time.

## Description

### TECHNICAL FIELD

The present disclosure relates to the technical field of virtual reality, and particularly to a creation method and an interactive control method of an interactive space, an interactive space and an apparatus.

### BACKGROUND

With the progress of science and technologies, Virtual Reality (VR) and Augmented Reality (AR) have been widely used in various fields such as entertainment, games, social interaction, education, medical treatment, industry, etc.

Virtual reality technology provides users with an immersive experience by simulating a three-dimensional environment, and AR technology enables users to interact with the physical world by enhancing the information of a real-world environment. In the field of social interaction, some social software products can realize multi-person video chats, or simultaneous multi-person games, but the video chat and the game cannot be realized at the same time. In the field of VR, some VR products can be used by user to create their own images in the virtual world, communicate with strangers, and watch movies and play bowling with friends in a game module, but it is necessary to switch different scenes to chat and play games. Therefore, how to propose a virtual reality environment that is both entertaining and interactive, which can simultaneously support a variety of entertainment and interaction, has become an important issue to be solved urgently in this field.

### SUMMARY

Aiming at the problems in the prior art, the embodiments of the present disclosure provide a creation method and an interactive control method of an interactive space, an interactive space and an apparatus.

In a first aspect, the present disclosure provides a creation method of an interactive space, including:
establishing a basic space model, and the basic space model is configured to support a plurality of component models;
importing a three-dimensional model and/or animation of each component model into the basic space model;
setting a corresponding position for each component model in the basic space model; and
configuring interactive information for at least one component model to complete the establishment of the basic space.

In a second aspect, the present disclosure provides an interactive control method of an interactive space, including:

receiving a join request sent by an interactive terminal;
joining a personal virtual avatar corresponding to the interactive terminal into the basic space according to a joining rule, and the joining rule is preset; and
responding to an interactive instruction sent by the interactive terminal in the basic space according to the interactive instruction.

In a third aspect, the present disclosure provides an interactive space, including a basic space created by the creation method of the interactive space according to any one of the above-mentioned embodiments.

In a fourth aspect, the present disclosure provides a creation apparatus of an interactive space, including:
an establishment unit configured to establish a basic space model, and the basic space model is configured to support a plurality of component models;
an importing unit configured to import a three-dimensional model and/or animation of each component model into the basic space model;
a setting unit configured to set a corresponding position for each component model in the basic space model; and
a configuration unit configured to configure interactive information for at least one component model to complete the establishment of the basic space.

In a fifth aspect, the present disclosure provides an interactive control apparatus of an interactive space, including:
a receiving unit configured to receive a join request sent by an interactive terminal;
a joining unit configured to join a personal virtual avatar corresponding to the interactive terminal into the basic space according to a joining rule, and the joining rule is preset; and
a responding unit configured to respond to an interactive instruction sent by the interactive terminal in the basic space according to the interactive instruction.

In a sixth aspect, the present disclosure provides a computer device, including a memory, a processor and a computer program stored on the memory, and when executing the computer program, the processor implements the creation method of the interactive space or the interactive control method of the interactive space according to any of the above-mentioned embodiments.

In a seventh aspect, the present disclosure provides a computer-readable storage medium that stores a computer program/instruction, when executed by a processor, the computer program/instruction implements the creation method of the interactive space or the interactive control method of the interactive space according to any of the above-mentioned embodiments.

In an eighth aspect, the present disclosure provides a computer program product, including a computer program/instruction, and the computer program/instruction, when executed by a processor, implements the creation method of the interactive space or the interactive control method of the interactive space according to any of the above-mentioned embodiments.

The creation method and the interactive control method of the interactive space, the interactive space and the apparatus are provided by the embodiments of the present disclosure. The basic space model is configured to support a plurality of component models; a three-dimensional model and/or animation of each component model is imported into the basic space model; a corresponding position for each component model is set in the basic space model; and interactive information is configured for at least one component model to complete the establishment of the basic space, so that a stereoscopic immersive experience can be brought about through various interactions among the components in the basic space at the same time.

### BRIEF DESCRIPTION OF THE DRAWINGS

In order to more clearly illustrate the technical solutions in the embodiments of the present disclosure or in the prior art, the drawings to be used in the description of the embodiments or the prior art will be briefly introduced as follows. Obviously, the drawings concerned in the following description only illustrate some embodiments of the present disclosure, and those of ordinary skill in the art can obtain other drawings from them without paying any inventive effects. In the drawings,
FIG. 1 illustrates a flowchart of a creation method of an interactive space according to a first embodiment of the present disclosure.
FIG. 2 illustrates a flowchart of a creation method of an interactive space according to a second embodiment of the present disclosure.
FIG. 3 illustrates a flowchart of an interactive control method of an interactive space according to a third embodiment of the present disclosure.
FIG. 4 illustrates a flowchart of an interactive control method of an interactive space according to a fourth embodiment of the present disclosure.
FIG. 5 illustrates a structural diagram of a creation apparatus of an interactive space according to a fifth embodiment of the present disclosure.
FIG. 6 illustrates a structural diagram of a creation apparatus of an interactive space according to a sixth embodiment of the present disclosure.
FIG. 7 illustrates a structural diagram of an interactive control apparatus of an interactive space according to a seventh embodiment of the present disclosure.
FIG. 8 illustrates a structural diagram of an interactive control apparatus of an interactive space according to an eighth embodiment of the present disclosure.
FIG. 9 illustrates a structural diagram of an entity of an electronic device according to a ninth embodiment of the present disclosure.

### DESCRIPTION OF THE EMBODIMENTS

In order that the objectives, technical solutions and advantages of the embodiments of the present disclosure are clearer, the embodiments of the present disclosure will be further described in detail below with reference to the drawings. Here, the exemplary embodiments of the present disclosure and the descriptions thereof are used to illustrate the present disclosure, rather than being used as limitations thereto. It should be noted that the embodiments of the present disclosure and the features in the embodiments can be arbitrarily combined with each other without conflict. The acquisition, storage, use, processing, etc. of data in the technical solutions of the present disclosure comply with the relevant provisions of laws and regulations. Any user information in the embodiments of the present disclosure is obtained through legal and compliant channels, and the acquisition, storage, use, processing, etc. of the user information are authorized and agreed by the customers.

In order to facilitate the understanding of the technical solutions of the present disclosure, the related contents of the technical solutions of the present disclosure will be firstly illustrated below.

The creation method and the interactive control method of the interactive space, the interactive space and apparatus according to the embodiments of the present disclosure may be implemented based on a Vision Pro platform and a VisionOS system thereof, and the principles of the solutions are also applicable to other devices of virtual reality or augmented reality or mixed reality such as VR/ Mixed Reality (MR)/ Extended Reality (XR)/AR.

A plurality of users enter a basic space of the present disclosure through virtual reality devices, and the basic space is a virtual space, so that the plurality of users located in different places in the physical world can be mapped into the basic space, thereby transcending the limitations of physical environments and objective factors such as regions, weather, places, trips, etc., and providing a real face-to-face presence and experiences of cross-space communication and interaction, so that the plurality of users can obtain excellent entertainment and social experiences through the immersive interactive form of the virtual reality devices. In this embodiment, the virtual reality device includes, but is not limited to, a head-mounted stereoscopic display or the like, which may be selected according to actual needs and is not limited in the embodiment of the present disclosure.

Next, a server is taken as an execution subject for example to describe the specific implementation process of an interactive space creation method according to an embodiment of the present disclosure. It is understandable that the execution subject of the interactive space creation method according to the embodiment of the present disclosure is not limited to the server.

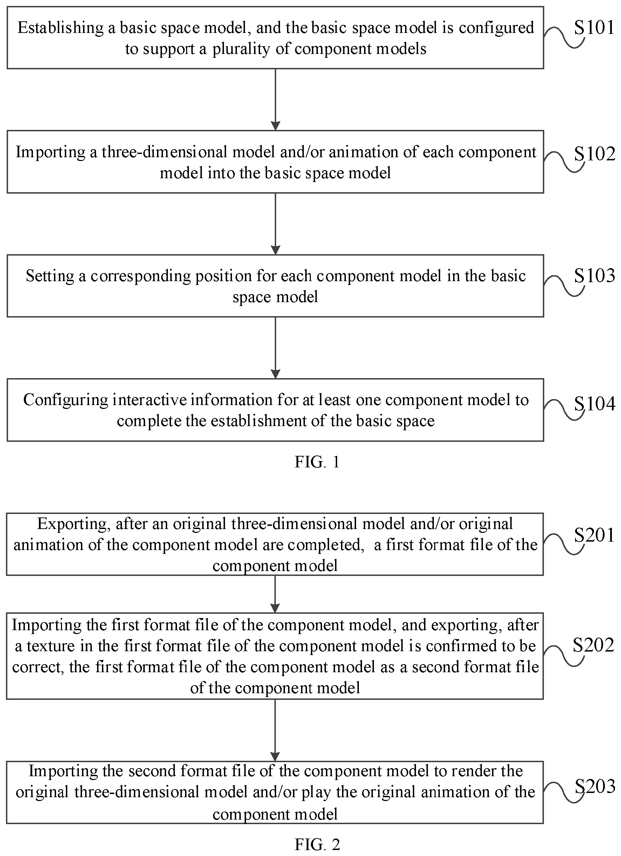

FIG. 1 illustrates a flowchart of a creation method of an interactive space according to a first embodiment of the present disclosure. As illustrated in FIG. 1, the creation method of the interactive space creation method according to the embodiment of the present disclosure includes:
S101: establishing a basic space model, and the basic space model is configured to support a plurality of component models.

Specifically, a basic space model can be established to support a plurality of component models, that is, after the basic space model is established, a plurality of component models may be configured inside the basic space model. It is understandable that the server is deployed with software required to create the interactive space.

For example, a basic space model and a corresponding animation may be made using 3D model software such as Blender or Maya, and exported as files in a format of fbx or glb, then opened with Reality Converter to check whether a texture(material) is correct, and if correct, the opened files of fbx or glb are exported to files in a format of usdz. The above files in usdz are imported with Reality Composer Pro to render the basic space model and play the corresponding animation, and the effect of the rendering and the animation playing is adjusted according to actual needs.

S102: importing a three-dimensional model and/or animation of each component model into the basic space model.

Specifically, the three-dimensional model and/or animation of each component model may be imported into the basic space model, and the component model includes, but is not limited to, a game and entertainment component model, a decoration component model or the like, which may be set according to actual needs and is not limited in the embodiment of the present disclosure. In the embodiment, the three-dimensional model and/or animation of each component model is obtained in advance.

For example, the game and entertainment component model includes, but is not limited to, an international chess component model, a Go component model, a playing card component model, a console component model, a record player component model or the like. The decorative component includes, but is not limited to, a green plant component model, a sofa component model, a coffee table component model, a chair component model, a desktop decoration model, a pet model component model, a decorative painting component model, or the like.

S103: setting a corresponding position for each component model in the basic space model.

Specifically, the placement position of each component model is set in the basic space model, which may be set according to actual needs and is not limited in the embodiment of the present disclosure.

S104: configuring interactive information for at least one component model to complete the establishment of the basic space.

Specifically, for the component models needing interaction, after their positions are set in the basic space model, interaction information of those component models may be configured. For the component models not needing interaction, interaction information may not be configured. After each component model in the basic space model is configured, the basic space is established. In the basic space, interaction may be made with the component models to exchange decorations, play games, entertain or chat in the basic space, and the users can play games, entertain and chat synchronously in the basic space. In this embodiment, the basic space may be divided into a personal space and a public space, and the personal space may be established in imitation of the rooms of private houses, and the public space may be established in imitation of public places such as karaoke television (KTV), theaters, gymnasiums, cinemas and concert halls.

For example, an audio may be played through an interaction with a record player component in the basic space, and since the record player component is configured with a spatial audio, the audio may be played with a spatial audio effect. A personal virtual avatar corresponding to a user stands by a window and a desk in the basic space, and the audio heard will be obviously distinguished by the volume and the orientation of left and right ears.

For example, through the interaction with a wallpaper component in the basic space, wallpaper can be replaced.

For example, an international chess component is placed on the desktop of the personal space, and through the interaction with the international chess component, a chess board may be opened to play chess.

For example, in the personal space, when the audio is played by the record player component, it is possible to play chess through the international chess component; and when chess is played through the international chess component, it is possible to chat with the opponent.

The creation method of the interactive space according to the embodiment of the present disclosure can establish a basic space model, and the basic space model is configured to support a plurality of component models; import a three-dimensional model and/or animation of each component model into the basic space model; set a corresponding position for each component model in the basic space model; and configure interactive information for at least one component model to complete the establishment of the basic space, so that a stereoscopic immersive experience is brought about through various interactions among the components in the basic space at the same time.

FIG. 2 illustrates a flowchart of a creation method of an interactive space according to a second embodiment of the present disclosure. As illustrated in FIG. 2, based on the above embodiments, further, the establishing a three-dimensional model and/or animation of each component model includes:
S201: exporting, after an original three-dimensional model and/or original animation of the component model are completed, as a first format file of the component model;
Specifically, a skilled person may create an original three-dimensional model and/or original animation of the component model through 3D model software, and export the created original three-dimensional model and/or original animation of the component model as a file of the component model, which is a first format file. In this embodiment, the 3D model software includes but is not limited to Blender, Maya, or the like, which may be selected according to actual needs and is not limited in the embodiment of the present disclosure. The first format file may be a file in a format of fbx or glb.

S202: importing the first format file of the component model, and exporting, after a texture in the first format file of the component model is confirmed to be correct, the first format file of the component model as a second format file of the component model.

Specifically, the first format file of the component model is imported into texture viewing software to check whether a texture in the displayed original three-dimensional model and/or original animation of the component model is correct, and after the texture is confirmed to be correct, the first format file is imported into a second format file of the component model. In this embodiment, the second format file may be a file in a format of usdz. The texture viewing software includes, but is not limited to, application software of Reality Converter. In this embodiment, whether the texture is correct may be judged by a skilled person.

It is understandable that if the texture in the original three-dimensional model and/or original animation of the component model is not correct, the original three-dimensional model and/or original animation of the component model may be modified until a texture confirmed to be correct is obtained.

S203: importing the second format file of the component model to render the original three-dimensional model and/or the original animation of the component model.

Specifically, the second format file of the component model is imported into rendering software to render the original three-dimensional model of the component model, and a three-dimensional model of the component model is obtained after rendering. The second format file of the component model is imported into the rendering software to render the original animation of the component model, and an animation of the component model is obtained after rendering.

Based on the above embodiments, further, the configuring interactive information for at least one component model includes:
configuring a spatial audio and/or interactive content for the component model.

Specifically, the spatial audio can place different sounds in different positions in the basic space. By using the spatial audio, each sound can be accurately placed in any position in the basic space, and the effect is just like the sound heard in physical world life, which has an obvious sense of direction in space, as if being immersive. By configuring the spatial audio for the component model, such as a record player component model, the user's experience is more realistic when a component corresponding to the component model plays the audio.

The interactive content includes, but is not limited to, a pop-up window prompt, a selection menu, a scene trigger, or the like, which may be set according to actual needs and is not limited in the embodiment of the present disclosure. For example, when the interactive content is configured for a record player component model, a selection menu of the record player component may be configured, and the specific operation logic of each selection menu may be prompted in the form of a pop-up window. When the interactive content is configured for an international chess component model, it may be configured that when detecting that the eyes of the personal virtual avatar of the user in the basic space to stare at an international chess component for more than a set duration, an inquiry menu is popped up, and gestures to select the pop-up inquiry menu may be configured. The pop-up inquiry menu is used to query whether to play a chess game, a gesture of finger kneading may indicate that the user is sure to play a chess game, and a gesture of waving may indicate that the user denies playing a chess game. In this embodiment, the set duration may be set according to actual needs, and is not limited in the embodiment of the present disclosure.

Based on the above embodiments, further, the basic space includes a personal space and a public space.

Specifically, the basic space includes a personal space and a public space. The personal space may be established in imitation of the rooms of private houses, and the public space may be established in imitation of public places such as KTV, theaters, gymnasiums, cinemas and concert halls.

The basic space may be divided into indoor scene and outdoor scene, that is, the personal space and the public space may be divided into indoor scene and outdoor scene.

The indoor scene may be personalized and customized, including but not limited to the individualization of interior decorations such as the replacement of wallpaper and floor, the replacement of wall painting, the replacement of lamps and the replacement of curtains, etc., the indoor style of the house and the placement and replacement of all indoor items may be set according to the user's own preference, and the user can even have his own pet. The personalized dress-up of the basic space may be completed through the interactive operation of various indoor decoration components. The outdoor scene includes the presentation of a series of natural worlds such as weather, time, seasons and scenery. The combination of the indoor scene and the outdoor scene provides a rich, multi-level and immersive environmental feeling. The outdoor scene may be realized by a three-dimensional model and a high dynamic range imaging (HDRI) sky sphere stratification solution.

A green plant component, a sofa component, a coffee table component, etc. included in the indoor scene are all movable components, and the user may place and decorate the basic space at will according to the preference.

When the indoor scene is decorated, the change of the color of the wall will lead to the change the ambient light in the whole basic space, rather than simply changing the color of the wall. For example, when the color of the wall is changed as green, other objects will all reflect the green ambient light. This color variation is achieved through a physically-based rendering (PBR) lighting simulation, utilizing parameters such as BaseColor, Metallic, Roughness, Ambient occlusion (AO)/Lightmap, and Normal maps. The change of the ambient light will influence the rendering performance of roughness/smoothness of a 3D object.

In order to achieve the above rendering effect, the manufacturing process of the component model is as follows:
(1) Manufacturing a high-poly model and a low-poly model of a 3D model of the component model; the manufacturing of the high-poly model: according to the image of the actual component or the scene setting of the actual component, carving the high-poly model with software zbrush, and the surface of the model should be kept smooth without rough strokes during the carving of the high-poly model. The manufacturing of the low-poly model: using the high-poly model of the 3D model of the component model to topologize the low-poly model in the 3D software, and the high-poly model occupies a high performance in the system and cannot be used in an engine.
(2) Performing UV unwrapping for the 3D model of the component model; the UV unwrapping is convenient for a texture to be better fitted to the 3D model, and the position of the texture content corresponds to the position of the model accurately. For example, for a dice having six sides, the UV should be unwrapped into one plane in order to draw a texture, because the drawn texture is planar, so the UV should also be unwrapped into a planar.
(3) Performing texture baking for the high-poly model and the low-poly model of the 3D model of the component model; the texture baking may be performed in software SubstancePaint3D, and the process of the texture baking is a process of mapping the details of the high-poly model to the low-poly model. The information of the high-poly model may be recorded by a normal map, and the details of the high-poly model may be seen by mapping the normal map to the low-poly model through the UV.
(4) Drawing textures (maps): textures such as BaseCoLor, roughness, normal, metallic, Ao, lightmap, etc. may be drawn in the software. BaseCoLor represents a base color, i.e., a diffuse color of an object. A roughness texture describes the surface irregularity, which causes the light to be diffusely reflected, and the highlights of a rougher surface appear larger and darker. A smoother surface, on the other hand, retains the convergence of specular reflections, so that the highlights appear brighter or more intense, although the total amount of the reflected light is the same. Metallic represents metallicity, and a metallic texture does not contain physical-world measured values that are directly used as material properties, and instead, it simply provides a description to shader to indicate which areas in the intrinsic color texture should be interpreted as reflective colors (insulator area) and which areas represent metallic reflectivity values. In a metallic texture, 0.0 (black-0sRGB) represents nonmetal, and 1.0 (white-255sRGB) represents primary metal. In describing metal/nonmetal, the metallic texture tends to be binary, i.e., either white or black, either metal or nonmetal. Normal maps: a technology of simulating the effect of lighting in uneven surfaces, which is an implementation of bump textures (bump maps). A Normal map (texture) can add details into a model without adding polygons. A light texture is baked in 3D software (maya\blender), and light texturing (light mapping) is also a workflow adding indirect lighting (also known as fully baking lighting) to a scene, and the information of brightness and shadow is stored on the texture.

The outdoor scene may be presented in a distant scene, a middle scene or a close scene. The distant scene and the close scene are adopted to measure the actual real distance in the 3D software, the model is made according to the display scale, and the specific output mode is realized by the physically-based rendering (PBR) process. Part of the distant scene may be combined with the model built by the 3D software to render left and right red-blue dyeing effect pictures and output left and right pictures, add a monolithic model at about the same distance in an engine editor, and achieve the stereoscopic effect of the left and right eyes by shader. The distant scenes such as clouds and stars may be realized by an engine editor particle system. A particle emission system is added to emit particles with the form of spere according to time, and then the particle shading is adjusted according to time to achieve the star twinkling effect. A blue-sky layer is far from the ground and is realized by RGB solid color to avoid the problem of blurred texture. In this embodiment, the distant scene, the middle scene and the close scene are distinguished according to the actual real distance of the component measured in the 3D software. For example, if a distance between the component and a center of the basic space is less than or equal to a first distance, displaying is made by means of the close scene; if the distance between the component and the center of the basic space is greater than the first distance and less than or equal to a second distance, displaying is made by means of the middle scene; and if the distance between the component and the center of the basic space is greater than the second distance, displaying is made by means of the distant scene.

Based on the above embodiments, further, the creating method of the interactive space according to the embodiment of the present disclosure further includes:
constructing a community space based on a plurality of personal spaces and at least one public space.

Specifically, a community space may be constructed based on a plurality of personal spaces and at least one public space. It is understandable that scenes other than the personal spaces and the public space in the community space may be built through component models.

The community space may be constructed based on multiple dimensions such as serving people with common goals, hobbies, cultural habits, etc. The community space may be configured with a plurality of governance forms such as an operational official governance, an operational official and community hybrid governance, and a community autonomy, and different governance forms will have different behavioral permissions. The prosperity and development of the community space depends on the number of the personal spaces and public spaces which join the community and the participation levels thereof. The community space in the embodiment of the present disclosure may be oriented to common goals or preferences of transcending regions, languages boundaries, etc., and support its operators to attract more users to join in.

Based on the above embodiments, further, the creating method of the interactive space according to the embodiment of the present disclosure further includes:
constructing a world space based on at least one community space.

Specifically, a world space may be built through at least one community space. The world space includes at least one community space. It is understandable that in the world space, scenes other than the community space may be built through component models.

The world space is the largest unit of space in the present disclosure and may be built according to the needs of its operators. The world space may be a worldview of the earth such as land, sea, and sky, a worldview of an unknown planet such as the moon, or a completely imaginary space such as an island world or even a cloud world. The world space may be set according to actual needs and is not limited in the embodiment of the present disclosure.

The world space may include diverse array of community spaces that may be interconnected by means of access links. The access links may be set according to actual needs and is not limited in the embodiment of the present disclosure.

The basic space created by the creation method of the interactive space according to the embodiments of the present disclosure allows a chat interaction and a game entertainment to be carried out simultaneously, without switching between different scenes or moving the user's position by handle operation, and the current process will not be interrupted. The spatial audio technology is applied in the basic space, and an audio can be transmitted according to a user's orientation in the space rather than in a planar transmission, so that other users can perceive the position of the user, the overall experience is more stereoscopic, and the immersive experience is wholly better. The scene of the basic space may be set personally, the environment and lighting in the basic space may be set according to the user's needs, the wall color in the basic space may be switched in theme, the photos hanging on the wall may be customized, and the scenes outside the room may be switched. The personal virtual avatar of the user may be set to closely resemble themselves, rather than a preset virtual image of the product, so that the freedom degree and the personalization are higher.

Next, a server is taken as an execution subject for example to describe the specific implementation process of an interactive control method of an interactive space according to an embodiment of the present disclosure. It is understandable that the execution subject of the interactive control method of the interactive space according to the embodiment of the present disclosure is not limited to the server.

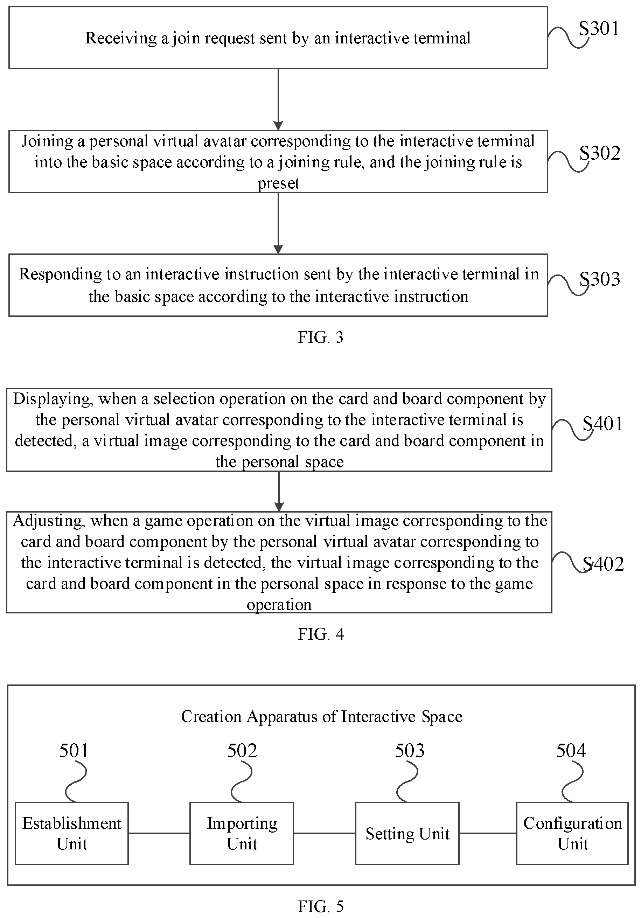

FIG. 3 illustrates a flowchart of an interactive control method of an interactive space according to a third embodiment of the present disclosure. As illustrated in FIG. 3, the interactive control method of the interactive space according to the embodiment of the present disclosure is applicable to the basic space according to any one of the above-mentioned embodiments, including:
S301: receiving a join request sent by an interactive terminal.

Specifically, when a user wants to join a basic space, a join request may be sent to a server through an interactive terminal, and the server receives the join request. In this embodiment, the interactive terminal is a virtual reality device for a user to interact with the basic space, including but not limited to a head-mounted stereoscopic display, etc.

For example, a user wears a head-mounted stereoscopic display, which displays a list of all basic spaces that can be joined on a screen, the user selects a basic space in the list to join, and the head-mounted stereoscopic display sends a join request to the server, and the join request includes a spatial identifier of the basic space selected by the user, and the basic space has a unique corresponding spatial identifier.

S302: joining a personal virtual avatar corresponding to the interactive terminal into the basic space according to a joining rule, and the joining rule is preset.

Specifically, after receiving the join request, the server joins the personal virtual avatar corresponding to the interactive terminal into the basic space according to the joining rule, so that the personal virtual avatar corresponding to the interactive terminal can be displayed in the basic space. In this embodiment, the joining rule is preset and may be set according to actual needs and is not limited in the embodiment of the present disclosure. The personal virtual avatar corresponding to the interactive terminal is a personal virtual avatar of the user using the interactive terminal. The personal virtual avatar of the user is pre-created.

In the embodiment of the present disclosure, three personal virtual avatars may be provided, and the user may make a selection according to his preference.
(1) A Persona personal virtual avatar, which is an image generated by a Vision Pro-based camera. The Persona personal virtual avatar realizes the expression of an image that can be driven through technologies such as face key point detection, and can truly represent the user in the basic space.
(2) A 3D personal virtual avatar, which may be based on a three-dimensional model made by the PBR process, and may be made into a personalized personal virtual avatar.
(3) Stylized personal virtual avatar, which is based on the face recognition and the face key point detection, and the stylized image of the user's face is generated by AI algorithms, and can also be expression-driven.

S303: responding to an interactive instruction sent by the interactive terminal in the basic space according to the interactive instruction.

Specifically, the user may carry out communications and interactions in the basic space. The user may send an interactive instruction to a server through the interactive terminal, and after receiving the interactive instruction, the server responds to the interactive instruction in the basic space.

For example, the 3D personal virtual avatar of the user in the personal space is located in front of a photo frame component, and the user enables the 3D personal virtual avatar to click the photo frame component through the interactive terminal. In response to the above click operation, a pop-up window appears for the user to select the operation on the photo frame component, the user may continue to select an option such as changing the photo frame, changing the color, hiding the photo frame, or the like in the pop-up window, and the server performs the corresponding operation on the photo frame component in the personal space according to the option selected by the user.

The interactive control method of the interactive space according to the embodiment of the present disclosure receives a join request sent by an interactive terminal; joins a personal virtual avatar corresponding to the interactive terminal into the basic space according to a joining rule; and responds to an interactive instruction sent by the interactive terminal in the basic space according to the interactive instruction, thereby realizing a stereoscopic immersive experience.

Based on the above embodiments, further, the base space is a personal space, which includes a set number of seats; and accordingly, the joining rule includes:
if it is determined that there is no joiner in the personal space, a seat is arbitrarily assigned to the personal virtual avatar corresponding to the interactive terminal;
if it is determined that there is already a joiner in the personal space and the total number of the joiner is less than the set number, a vacant seat is assigned to the personal virtual avatar corresponding to the interactive terminal; and
if it is determined that there is already a joiner in the personal space and the total number of the joiner is greater than or equal to the set number, no seat is assigned to the personal virtual avatar corresponding to the interactive terminal.
Specifically, the basic space is a personal space, in which a set number of seats are disposed in the personal space, and when a user applies to join the personal space, a seat is assigned to the personal virtual avatar of the user preferentially based on the joining rule, so that the personal virtual avatar of the user appears on the assigned seat. In this embodiment, the set number may be set according to actual needs and is not limited in the embodiment of the present disclosure.

If there is no joiner in the personal space when the user applies to join the personal space, any seat may be assigned to the personal virtual avatar corresponding to the interactive terminal. The joiner refers to a user having joined the personal space.

When the user applies to join the personal space, if there are already the joiner in the personal space but the total number of the joiner is less than the set number, i.e., there are still vacant seats, then a vacant seat is assigned to the personal virtual avatar corresponding to the interactive terminal.

When the user applies to join the personal space, if there are already the joiner in the personal space, and the total number of the joiner is greater than or equal to the set number, i.e., there is no vacant seat, then no seat is assigned to the personal virtual avatar corresponding to the interactive terminal.

For example, the personal space is provided with 8 seats circularly arranged. When a seat is occupied, the seat is displayed and the personal virtual avatar of the user is displayed on the seat; and when a seat is unoccupied, the seat may be displayed transparently in the personal space.

When a first user (hereinafter referred to as user 1) requests to join the personal space, since there is no joiner in the personal space before user 1, any seat may be assigned to user 1, the personal virtual avatar of user 1 appears on the assigned seat, and the seat changes from transparent to opaque.

When a second user (hereinafter referred to as user 2) requests to join the personal space, since there is already one joiner in the personal space before user 2, one of the remaining seven seat may be assigned to user 2, the personal virtual avatar of user 2 appears on the assigned seat, and the seat changes from transparent to opaque. User 2 may be preferentially assigned with a seat opposite to user 1, or a seat adjacent to user 1.

When a third user (hereinafter referred to as user 3) requests to join the personal space, since there are already two joiners in the personal space before user 3, one of the remaining six seats may be assigned to user 3, the personal virtual avatar of user 3 appears on the assigned seat, and the seat changes from transparent to opaque.

When a fourth user (hereinafter referred to as user 4) requests to join the personal space, since there are already three joiners in the personal space before user 4, one of the remaining five seats may be assigned to user 4, the personal virtual avatar of user 4 appears on the assigned seat, and the seat changes from transparent to opaque. At this time, the seats of the four users are separated by one empty seat.

A fifth user, a sixth user, a seventh user, and an eighth user requesting to join the personal space are assigned with one of the remaining seats, respectively, and the personal virtual avatars of the four users appear on the assigned seats.

When ninth user and users after a ninth user request to join the personal space, since the seats in the personal space are all occupied, no seat will be assigned to the users. The users after the ninth user will be audiences, and may be displayed in any other form such as a list.

Further, when a user having been assigned with a seat exits the personal space, the positions of users having been seated remain unchanged; if there are users not assigned with seats in the personal space at this time, the vacant seat is assigned to the users not assigned with seats according to their time sequences of joining the personal space; and if there is no user not assigned with a seat in the personal space at this time, the vacant seat is allocated to a newly joined user.

Further, an exclusive seat identifier may be set for an owner of the personal space to distinguish other users entering the personal space.

FIG. 4 illustrates a flowchart of an interactive control method of an interactive space according to a fourth embodiment of the present disclosure. As illustrated in FIG. 4, based on the above embodiments, further, the basic space is a personal space which includes a card and board component; accordingly, the responding to an interactive instruction sent by the interactive terminal in the basic space according to the interactive instruction includes:

S401: displaying, when a selection operation on the card and board component by the personal virtual avatar corresponding to the interactive terminal is detected, a virtual image corresponding to the card and board component in the personal space.

Specifically, a card and board component is provided in the personal space, and when a user wants to play card and board games through the card and board component, the personal virtual avatar of the user is operated through the interactive terminal to select the card and board component. After detecting the selection operation on the card and board component, the server displays a virtual image corresponding to the card and board component in the personal space. In this embodiment, the virtual image corresponding to the card and board component is preset, and may be established by imitating the real appearance of the card and board.

For example, the user may operate the fingers of the personal virtual avatar of the user through the interactive terminal to click the card and board component, so as to select the card and board component.

For example, the user may operate the eyes of the personal virtual avatar of the user through the interactive terminal to stare at the card and board component for more than a set duration. After detecting the stare, the server controls the card and board component to pop up an inquiry menu to inquire whether to play card and board. The user may operate the personal virtual avatar of the user through the interactive terminal to make a preset gesture to indicate that the user wants to play card and board. After detecting the gesture to play card and board, the server displays the virtual image corresponding to the card and board component in the personal space. In this embodiment, the virtual image corresponding to the card and board component may be displayed on a coffee table in the personal space.

S402: adjusting, when a game operation on the virtual image corresponding to the card and board component by the personal virtual avatar corresponding to the interactive terminal is detected, the virtual image corresponding to the card and board component in the personal space in response to the game operation.

Specifically, after the virtual image corresponding to the card and board component is displayed in the personal space, the user may perform a game operation on the virtual image corresponding to the card and board component by the personal virtual avatar corresponding to the interactive terminal, and after detecting the game operation, the server adjusts the virtual image corresponding to the card and board component in the personal space based on the game operation. In this embodiment, the game operation is preset.

For example, the card and board component is an international chess component. When there are a plurality of users in the personal space, user A may invite user B to play international chess in the personal space through the international chess component.

User A and user B have entered the personal space, and the personal virtual avatar of user A and the personal virtual avatar of user B are located at two ends of the coffee table, respectively. The international chess component is placed on a table next to a wall in the personal space.

User A operates the eyes of the personal virtual avatar of the user through the interactive terminal to stare at the international chess component for more than 5 seconds. After detecting that the stare at the international chess component is more than 5 seconds, the server controls the international chess component to pop up an inquiry menu to inquire whether to play international chess. User A operates the personal virtual avatar of the user through the interactive terminal to make a gesture of pinching with a thumb and an index finger to indicate that the user wants to play international chess. After detecting the gesture of pinching, the server displays the virtual image corresponding to the international chess component on a coffee table in the personal space. At this time, the virtual image corresponding to the international chess component shows an international chess board and chess pieces of opposing players placed on the international chess board.

User A and user B operate the eyes of the personal virtual avatar of the user through the interactive terminal to stare at the chess pieces on the international chess board, to select a chess piece, then operate the eyes of the personal virtual avatar of the user through the interactive terminal to stare at grids of the international chess board to select a movement target position, and operate the personal virtual avatar of the user through the interactive terminal to make a present gesture to confirm the movement of the chess piece, so that the selected chess piece moves from the original position to a selected grid. User A and user B can also chat directly when playing chess without switching scenes, i.e., chat and play games in the same space.

An interactive space according to an embodiment of the present disclosure includes a base space created by the creation method of the interactive space according to any one of the above embodiments. The base space may include a personal space and a public space.

Further, the interactive space may further include a community space and a world space.

The personal space according to the embodiment of the present disclosure may be used for gathering and chatting. Gatherings may be held in the user's own personal space or in the personal space of other users. Gathering and chatting may be held even when the owner of the personal space is not present.

When one user joins the personal space, it is considered that the gathering is about to be held. When more than 2 users join the personal space, the gathering starts automatically.

When the owner of a personal space sets the personal space in a private mode, other users cannot join the personal space directly, and need an invitation from the owner of the personal space to join the personal space.

After the users are seated in the personal space, a video chat can be automatically started, and the users may see each other's personal virtual avatars. A user's voice in the personal space is used to sense a seat orientation and a distance of the user through the spatial audio technology, and the users realize a real-time video and chat through a real-time communication (RTC) technology.

A user who joins the personal space may set audio preferences to mute the voice in the personal space and not listen to the voice of any other user in the personal space. A user may also shut off his own voice so that any other user in the personal space cannot hear his voice.

If the seats in the personal space are all occupied, a user who later joins the personal space becomes an audience and waits for a vacant seat to request to be seated for chat.

The audience in the personal space can see and hear the chat of the user who has a seat, but cannot speak. The personal space allows the audience to send a textual bullet-comments, each audience has his own positional coordinates in the personal space, and the text bullet-comments may appear in the positional coordinates of the audience.

The personal space according to the embodiment of the present disclosure allows a social interaction. The interactive form may be one-to-one, one-to-many or many-to-many. It is possible to express emotions and feelings in the personal space, show the current status of the user, and give virtual gifts. Interactive special effects may also be displayed in the personal space.

During social interaction in the personal space, the interactive forms of emotions and moods such as liking, angry and crying, and the interactive forms such as giving gifts can be completed through 3D vision and hearing.

In interaction, a user in the personal space may show his user status to friends and users around, such as drinking coffee, slacking off (taking a break) and listening to music.

Some limited interactions in the physical world, such as fireworks special effects and rainbow cloud, may also be displayed in the personal space.

In the interactive space according to the embodiment of the present disclosure, it is possible to make full use of various spatial computing power technologies such as persona, spatial audio/video/photo and 3D rendering of the Vision Pro device to create an entertaining and interactive space chat room, which can accommodate a plurality of persons at the same time and be displayed by Immersive, and a scene is created by Reality Composer Pro to provide users with an immersive experience. It is unnecessary for the users to adopt the traditional joystick operation to move their positions, or switch to any other scene, and the interaction of chatting and game can be completed in the same space.

FIG. 5 illustrates a structural diagram of a creation apparatus of an interactive space according to a fifth embodiment of the present disclosure. As illustrated in FIG. 5, the creation apparatus of the interactive space according to the embodiment of the present disclosure includes an establishment unit 501, an importing unit 502, a setting unit 503 and a configuration unit 504, and:

the establishment unit 501 is configured to establish a basic space model, and the basic space model is configured to support a plurality of component models; the importing unit 502 is configured to import a three-dimensional model and/or animation of each component model into the basic space model; the setting unit 503 is configured to set a corresponding position for each component model in the basic space model; and the configuration unit 504 is configured to configure interactive information for at least one component model to complete the establishment of the basic space.

Specifically, the establishment unit 501 may establish a basic space model to support a plurality of component models, that is, after the basic space model is established, a plurality of component models may be configured inside the basic space model.

The importing unit 502 may import the three-dimensional model and/or animation of each component model into the basic space model, and the component model includes, but is not limited to, a game and entertainment component model, a decoration component model or the like, which may be set according to actual needs and is not limited in the embodiment of the present disclosure. In this embodiment, the three-dimensional model and/or animation of each component model is obtained in advance.

The setting unit 503 sets the placement position of each component model in the basic space model, which may be set according to actual needs and is not limited in the embodiment of the present disclosure.

For the component models needing interaction, after their positions are set in the basic space model, the configuration unit 504 may configure interaction information for those component models. For the component models not needing interaction, interaction information may not be configured. After each component model in the basic space model is configured, the basic space is established. In the basic space, interaction may be made with the component models to exchange decorations, play games, entertain or chat in the basic space, and the users can play games, entertain and chat synchronously in the basic space. In this embodiment, the basic space may be divided into a personal space and a public space, and the personal space may be established in imitation of the rooms of private houses, and the public space may be established in imitation of public places such as KTV, theaters, gymnasiums, cinemas and concert halls.

The creation apparatus of the interactive space according to the embodiment of the present disclosure can establish a basic space model to support a plurality of component models; import a three-dimensional model and/or animation of each component model into the basic space model; set a corresponding position for each component model in the basic space model; and configure interactive information for at least one component model to complete the establishment of the basic space, so that a stereoscopic immersive experience is brought about through various interactions among the components in the basic space at the same time.

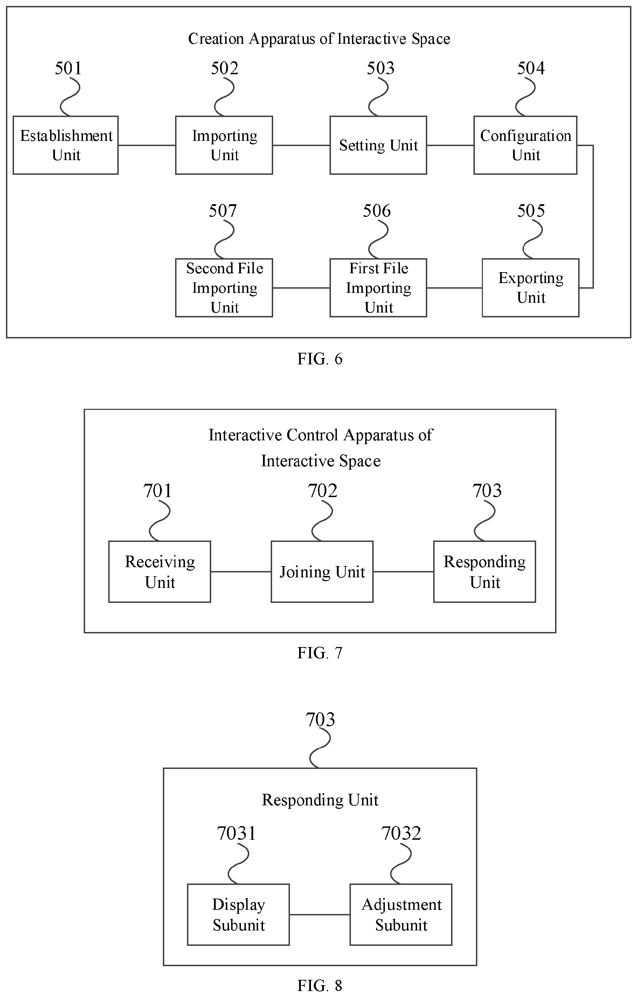

FIG. 6 illustrates a structural diagram of a creation apparatus of an interactive space according to a sixth embodiment of the present disclosure. As illustrated in FIG. 6, based on the above embodiments, further, the creation apparatus of the interactive space according to the embodiment of the present disclosure further includes an exporting unit 505, a first file importing unit 506 and a second file importing unit 507, in which:
the exporting unit 505 is configured to export, after an original three-dimensional model and/or original animation of the component model is completed, the component model in a first format file; the first file importing unit 506 is configured to import the first format file of the component model, and export, after a texture in the first format file of the component model is confirmed to be correct, the first format file of the component model as a second format file of the component model; and the second file importing unit 507 is configured to import the second format file of the component model to render the original three-dimensional model and/or play the original animation of the component model.

Based on the above embodiments, further, the configuration unit 504 is specifically configured to configure a spatial audio and/or interactive content for the component model.

Based on the above embodiments, further, the basic space includes a personal space and a public space.

Based on the above embodiments, further, the provided embodiment of the present disclosure includes:
construct a community space based on a plurality of personal spaces and at least one public space.

Based on the above embodiments, further, the creation apparatus of the interactive space according to the embodiment of the present disclosure further includes:
a construction unit configured to construct a world space based on at least one community space.

FIG. 7 illustrates a structural diagram of an interactive control apparatus of an interactive space according to a seventh embodiment of the present disclosure. As illustrated in FIG. 7, the interactive control apparatus of the interactive space according to the embodiment of the present disclosure includes a receiving unit 701, a joining unit 702 and a responding unit 703, in which:
the receiving unit 701 is configured to receive a join request sent by an interactive terminal; the joining unit 702 is configured to join a personal virtual avatar corresponding to the interactive terminal into the basic space according to a joining rule, and the joining rule is preset; and the responding unit 703 is configured to respond to an interactive instruction sent by the interactive terminal in the basic space according to the interactive instruction.

Specifically, when a user wants to join a basic space, a join request may be sent to a receiving unit 701 through an interactive terminal, and the receiving unit 701 receives the join request. In this embodiment, the interactive terminal is a virtual reality device for a user to interact with the basic space, including but not limited to a head-mounted stereoscopic display, etc.

After receiving the join request, the joining unit 702 joins the personal virtual avatar corresponding to the interactive terminal into the basic space according to the joining rule, so that the personal virtual avatar corresponding to the interactive terminal can be displayed in the basic space. In this embodiment, the joining rule is preset and may be set according to actual needs and is not limited in the embodiment of the present disclosure. The personal virtual avatar corresponding to the interactive terminal is a personal virtual avatar of the user using the interactive terminal. The personal virtual avatar of the user is pre-created.

The user may carry out communications and interactions in the basic space. The user may send an interactive instruction to a responding unit 703 through the interactive terminal, and after receiving the interactive instruction, the responding unit 703 responds to the interactive instruction in the basic space.

The interactive control apparatus of the interactive space according to the embodiment of the present disclosure receives a join request sent by an interactive terminal; joins a personal virtual avatar corresponding to the interactive terminal into the basic space according to the joining rule; and responds to an interactive instruction sent by the interactive terminal in the basic space according to the interactive instruction, thereby realizing a stereoscopic immersive experience.

Based on the above embodiments, further, the base space is a personal space, which includes a set number of seats; and accordingly, the joining rule includes:
if it is determined that there is no joiner in the personal space, a seat is arbitrarily assigned to the personal virtual avatar corresponding to the interactive terminal;
if it is determined that there is already a joiner in the personal space and the total number of the joiner is less than the set number, a vacant seat is assigned to the personal virtual avatar corresponding to the interactive terminal; and
if it is determined that there is already a joiner in the personal space and the total number of the joiner is greater than or equal to the set number, no seat is assigned to the personal virtual avatar corresponding to the interactive terminal.

FIG. 8 illustrates a structural diagram of an interactive control apparatus of an interactive space according to an eighth embodiment of the present disclosure. As illustrated in FIG. 8, based on the above embodiments, further, the basic space is a personal space which includes a card and board component; accordingly, the responding unit 703 includes a display subunit 7031 and an adjustment subunit 7032, in which:
the display subunit 7031 is configured to display, when a selection operation on the card and board component by the personal virtual avatar corresponding to the interactive terminal is detected, a virtual image corresponding to the card and board component in the personal space,; and the adjustment subunit 7032 is configured to adjust, when a game operation on the virtual image corresponding to the card and board component by the personal virtual avatar corresponding to the interactive terminal is detected, the virtual image corresponding to the card and board component in the personal space in response to the game operation.

The embodiment of the apparatus according to the embodiment of the present disclosure may be specifically used to execute the processing flows of the above method embodiments, and the functions thereof are not repeated here, for which reference can be made to the detailed description of the above method embodiments.

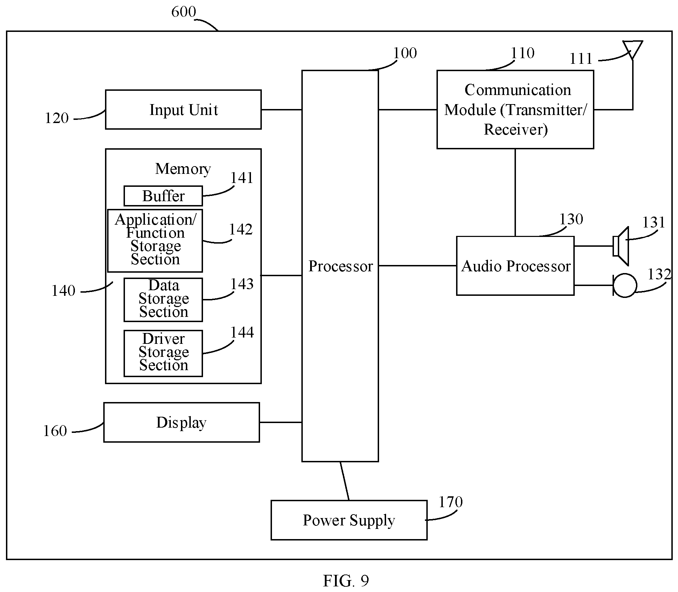

FIG. 9 illustrates a structural diagram of an entity of an electronic device according to a ninth embodiment of the present disclosure. As illustrated in FIG. 9, an electronic device 600 may include a processor 100 and a memory 140. The memory 140 is coupled to a processor 100. The processor 100 may call a logic instruction in the memory 140 to execute the following method: establishing a basic space model, and the basic space model is configured to support a plurality of component models; importing a three-dimensional model and/or animation of each component model into the basic space model; setting a corresponding position for each component model in the basic space model; and configuring interactive information for at least one component model to complete the establishment of the basic space. Or,
receiving a join request sent by an interactive terminal; joining a personal virtual avatar corresponding to the interactive terminal into the basic space according to a joining rule, and the joining rule is preset; and responding to an interactive instruction sent by the interactive terminal in the basic space according to the interactive instruction.

The embodiment discloses a computer program product, which includes a computer program stored on a non-transient computer-readable storage medium, and the computer program includes program instructions, and when the program instructions are executed by a computer, the computer can execute the methods according to the above method embodiments, including, for example, establishing a basic space model, and the basic space model is configured to support a plurality of component models; importing a three-dimensional model and/or animation of each component model into the basic space model; setting a corresponding position for each component model in the basic space model; and configuring interactive information for at least one component model to complete the establishment of the basic space. Or,
receiving a join request sent by an interactive terminal; joining a personal virtual avatar corresponding to the interactive terminal into the basic space according to a joining rule, and the joining rule is preset; and responding to an interactive instruction sent by the interactive terminal in the basic space according to the interactive instruction.

The embodiment provides a computer-readable storage medium, which stores a computer program enabling a computer to execute the methods according to the above method embodiments, including, for example, establishing a basic space model, and the basic space model configured to support a plurality of component models; importing a three-dimensional model and/or animation of each component model into the basic space model; setting a corresponding position for each component model in the basic space model; and configuring interactive information for at least one component model to complete the establishment of the basic space. Or,
receiving a join request sent by an interactive terminal; joining a personal virtual avatar corresponding to the interactive terminal into the basic space according to a joining rule, and the joining rule is preset; and responding to an interactive instruction sent by the interactive terminal in the basic space according to the interactive instruction.

As illustrated in FIG. 9, the electronic device 600 may further include a communication module 110, an input unit 120, an audio processor 130, a display 160, and a power supply 170. To be noted, the electronic device 600 does not necessarily include all the components illustrated in FIG. 9. In addition, the electronic device 600 may further include components not illustrated in FIG. 9, and reference can be made to the prior art. To be noted, FIG. 9 is exemplary, and any other type of structure may also be used to supplement or replace this structure to realize a telecommunication functions or other functions.

As illustrated in FIG. 9, the processor 100, sometimes called a controller or an operation control, may include a microprocessor or any other processor device and/or logic device. The processor 100 receives an input and controls the operations of various components of the electronic device 600.

In this embodiment, the memory 140 may be, for example, one or more of a buffer, a flash memory, a hard drive, a removable medium, a volatile memory, a nonvolatile memory or any other suitable device. The memory 140 may store information related to a failure, and may further store a program for executing relevant information. In addition, the processor 100 can execute the program stored in the memory 140 to realize information storage, processing, etc.

The input unit 120 provides an input to the processor 100. The input unit 120 is, for example, a key or a touch input device. The power source 170 is configured to supply power to the electronic device 600. The display 160 is configured to display an object to be displayed, such as an image or a text. The display may be, for example, a liquid crystal display (LCD), but is not limited thereto.

The memory 140 may be a solid-state memory, such as a read only memory (ROM), a random-access memory (RAM), a SIM card, etc. The memory 140 may also be a memory that holds information even when power is off, and can be selectively erased and provided with more data. An example of the memory 140 is sometimes called an EPROM, etc. The memory 140 may also be some other type of device. The memory 140 includes a buffer memory 141 (also called a buffer). The memory 140 may include an application/function storage section 142 configured to store application programs and function programs or a flow utilized by the processor 100 to execute operations of the electronic device 600 by.

The memory 140 may further include a data storage section 143 which stores data, such as contacts, number data, pictures, sounds and/or any other data used by the electronic device. A driver storage section 144 of the memory 140 may include various drivers for the communication function and/or other functions (e.g., messaging application, address book application, etc.) of the electronic device.

The communication module 110 includes a sender/receiver which sends and receives signals via an antenna 111. The communication module 110 is coupled to the processor 100 to provide an input signal and receive an output signal, which may be the same as the case of a conventional mobile communication terminal.

Based on different communication technologies, a plurality of communication modules 110, such as a cellular network module, a Bluetooth module and/or a wireless local area network module, may be provided in a same electronic device. The communication module 110 is further coupled to a speaker 131 and a microphone 132 via an audio processor 130 to provide an audio output via the speaker 131 and receive an audio input from the microphone 132, thereby realizing the general telecommunications function. The audio processor 130 may include any suitable buffer, decoder, amplifier, etc. In addition, the audio processor 130 is further coupled to the processor 100, so that audios can be recorded locally through the microphone 132 and sound stored locally can be played through the speaker 131.

Persons skilled in the art should appreciate that any embodiment of the present disclosure can be provided as a method, a system or a computer program product. Therefore, the present disclosure can take the form of a full hardware embodiment, a full software embodiment, or an embodiment combining software and hardware. Moreover, the present disclosure can take the form of a computer program product implemented on one or more computer usable storage mediums (including, but not limited to, a magnetic disc memory, CD-ROM, optical storage, etc.) containing therein computer usable program codes.

The present disclosure is described with reference to a flowchart and/or a block diagram of the method, device (system) and computer program product according to the embodiments of the present disclosure. It shall be appreciated that each flow and/or block in the flowchart and/or the block diagram and a combination of flows and/or blocks in the flowchart and/or the block diagram can be realized by computer program instructions. Those computer program instructions can be provided to a general computer, a dedicated computer, an embedded processor or a processor of other programmable data processing device to produce a machine, so that the instructions executed by the processor of the computer or other programmable data processing device produce apparatus for realizing specified functions in one or more flows in the flowchart and/or one or more blocks in the block diagram.

These computer program instructions may also be stored in a computer readable memory capable of guiding the computer or other programmable data processing devices to work in a particular manner, so that the instructions stored in the computer readable memory can produce manufacture articles including an instructing device, and the instructing device realizes function(s) specified in one or more flows in the flowchart and/or one or more blocks in the block diagram.

These computer program instructions may also be loaded onto the computer or other programmable data processing devices, so that a series of operation steps are executed by the computer or other programmable data processing devices to produce a processing realized by the computer, thus the instructions executed by the computer or other programmable devices provide step(s) for realizing function(s) specified in one or more flows in the flowchart and/or one or more blocks in the block diagram.

In the description of the present disclosure, the description of reference terms "an embodiment", "a specific embodiment", "some embodiments", "for example", "an example", "a specific example" or "some examples" and the like mean that the specific features, structures, materials, or characteristics described in conjunction with the embodiment(s) or example(s) are included in at least one embodiment or example of the present disclosure. In the present disclosure, the schematic expressions of the above terms do not necessarily aim at the same embodiment or example. Moreover, the specific features, structures, materials, or characteristics described may be combined in any one or more embodiments or examples in a suitable manner.

The specific embodiments described above further illustrate the objectives, technical solutions and advantageous effects of the present disclosure in detail. It should be understood that those described above are just specific embodiments of the present disclosure, rather than limitations thereto. Any modification, equivalent substitution, improvement, etc. made within the spirit and principle of the present disclosure should be included in the protection scope of the present disclosure.

## Claims

1. A creation method of an interactive space, comprising:
establishing a basic space model, wherein the basic space model is configured to support a plurality of component models;
importing a three-dimensional model and/or animation of each component model into the basic space model;
setting a corresponding position for each component model in the basic space model; and
configuring interactive information for at least one component model to complete the establishment of the basic space.

2. The method according to claim 1, wherein the establishing the three-dimensional model and/or animation of each component model comprises:
exporting, after an original three-dimensional model and/or original animation of the component model is completed, as a first format file of the component model;
importing the first format file of the component model, and exporting, after a texture in the first format file of the component model is confirmed to be correct, the first format file of the component model as a second format file of the component model; and
importing the second format file of the component model to render the original three-dimensional model and/or play the original animation of the component model.

3. The method according to claim 1, wherein the configuring interactive information for at least one component model comprises:
configuring a spatial audio and/or interactive content for the component model.

4. The method according to claim 1, wherein the basic space comprises a personal space and a public space.

5. The method according to claim 4, further comprising:
constructing a community space based on a plurality of personal spaces and at least one public space.

6. The method according to claim 5, further comprising:
constructing a world space based on at least one community space.

7. An interactive control method of an interactive space, which is applied to the basic space according to any of claims 1 to 6, comprising:
receiving a join request sent by an interactive terminal;
joining a personal virtual image corresponding to the interactive terminal into the basic space according to a joining rule, wherein the joining rule is preset; and
responding to an interactive instruction sent by the interactive terminal in the basic space according to the interactive instruction.

8. The method according to claim 7, wherein the base space is a personal space which includes a set number of seats; and accordingly, the joining rule comprises:
if it is determined that there is no joiner in the personal space, a seat is arbitrarily assigned to the personal virtual avatar corresponding to the interactive terminal;
if it is determined that there is already a joiner in the personal space and the total number of the joiner is less than the set number, a vacant seat is assigned to the personal virtual avatar corresponding to the interactive terminal; and
if it is determined that there is already a joiner in the personal space and the total number of the joiner is greater than or equal to the set number, no seat is assigned to the personal virtual avatar corresponding to the interactive terminal.

9. The method according to claim 7, wherein the basic space is a personal space which comprises a card and board component; accordingly, the responding to the interactive instruction in the basic space according to the interactive instruction of the personal virtual avatar in the basic space which is sent by the interactive terminal comprises:
displaying, when a selection operation on the card and board component by the personal virtual avatar corresponding to the interactive terminal is detected, a virtual image corresponding to the card and board component in the personal space; and
adjusting, when a game operation on the virtual image corresponding to the card and board component by the personal virtual avatar corresponding to the interactive terminal is detected, the virtual image corresponding to the card and board component in the personal space in response to the game operation.

10. An interactive space, comprising a basic space created by the creation method of the interactive space according to any of claims 1 to 6.

11. A creation apparatus of an interactive space, comprising:
an establishment unit configured to establish a basic space model, wherein the basic space model is configured to support a plurality of component models;
an importing unit configured to import a three-dimensional model and/or animation of each component model into the basic space model;
a setting unit configured to set a corresponding position for each component model in the basic space model; and
a configuration unit configured to configure interactive information for at least one component model to complete the establishment of the basic space.

12. An interactive control apparatus of an interactive space, comprising:
a receiving unit configured to receive a join request sent by an interactive terminal;
a joining unit configured to join a personal virtual avatar corresponding to the interactive terminal into the basic space according to a joining rule, wherein the joining rule is preset; and
a responding unit configured to respond to an interactive instruction sent by the interactive terminal in the basic space according to the interactive instruction.

13. A computer device, comprising a memory, a processor and a computer program stored on the memory, wherein executing the computer program, the processor implements the steps of the method according to any of claims 1 to 6, or the steps of the method according to any of claims 7 to 9.

14. A computer-readable storage medium storing a computer program/instruction, when executed by a processor, the computer program/instruction implements the steps of the method according to any of claims 1 to 6, or the steps of the method according to any of claims 7 to 9.

15. A computer program product, comprising a computer program/instruction, wherein the computer program/instruction, when executed by a processor, implements the steps of the method according to any of claims 1 to 6, or the steps of the method according to any of claims 7 to 9.
